# EUROPEAN PATENT SPECIFICATION

(11) **EP 4 669 694 B1**
(45) Date of publication and mention of the grant of the patent: **02.12.2026**
(21) Application number: 24706128.6
(22) Date of filing: 21.02.2024
(51) Int. Cl.: C08J 11/16

(54) **PROCESS FOR DEPOLYMERIZING POLYAMIDE PREPARED FROM CAPROLACTAM**
VERFAHREN ZUR DEPOLYMERISATION VON POLYAMIDEN AUS CAPROLACTAM
PROCÉDÉ DE DÉPOLYMÉRISATION DE POLYAMIDE PRÉPARÉ À PARTIR DE CAPROLACTAME

(30) Priority: 22.02.2023 EP 23157970
(43) Date of publication of application: 31.12.2025
(73) Proprietor: BASF SE, 67056 Ludwigshafen am Rhein (DE)
(72) Inventor: SCHULZ, Ralf, 76547 Sinzheim (DE); KELLENBENZ, Jochen, 67056 Ludwigshafen am Rhein (DE); BEYER, Caroline, 67056 Ludwigshafen am Rhein (DE); RICHTER, Florian, 67056 Ludwigshafen am Rhein (DE)
(74) Representative: BASF IP Association
(86) International application number: PCT/EP2024/054439
(87) International publication number: WO 2024/175671

(56) References cited:
- CN-A- 1 169 720
- US-A- 5 266 694

## Description

The present invention relates to a process for alkaline depolymerization of polyamides through the addition of polyamide 66 (PA66) to obtain caprolactam.

Polyamide, and in particular polyamide 6 being characterized by the formula (-NH-(CH₂)₅-CO-)ₙ, can be found in numerous materials, such as packaging, engineering plastics from automotive and textile filaments. At present, only a very small part of the textile filaments is recycled while it represents a significant percentage of the global CO₂ emissions. Process for depolymerizing polyamide, in particular polyamide 6 exists.

For example, alkaline depolymerization can be used for recycling polyamide waste to caprolactam. In this regard, US 5536831 B discloses a process for obtaining caprolactam from caprolactam-containing polymers in the presence of a base. According to this process, the caprolactam-containing polymer is melted, mixed with a base and depolymerized under reduced pressure obtaining caprolactam.

Another process for obtaining caprolactam from polyamides in the presence of water by means of an alkali or earth alkali metal compound is described in EP 0875504 A1. According to this process, the depolymerization is carried out by passing steam through a molten mixture of polyamide and alkali or earth alkali metal compound.

CN 1 169 720 A relates to a depolymerization process of thermoplastic molding materials for preparing hexanolactam carried out under high temperature, decompression, and in the presence of alkali, or in the presence of water.

US 5,266,694 A discloses a process for simultaneously depolymerizing and reclaiming the component parts of, both, nylon 6 and nylon 6,6. The process includes nylon depolymerization to monomer components in a basic system followed by steam distillation of the monomers.

Despite the advances made with regard to the depolymerization of polyamides to obtain caprolactam, there remains the need for a highly efficient and fast process for the depolymerization of polyamides. Most end of life products with a high polyamide material content require an increased residence time compared to virgin polyamide that results in prolonged reaction time and hence a decrease in space time yield, which can rise invest costs.

Therefore, it was an object of the present invention to provide an improved process for depolymerization of a solid material comprising a polyamide, which exhibits shortened reaction times. Surprisingly, it was found that the addition of PA66 to the depolymerization of polyamide 6 accelerates the overall polymer depolymerization. This significantly shortens the reaction time and increases space time yield which permits to be more cost effective.

Therefore, the present invention relates to a process for depolymerizing polyamide prepared from ε-caprolactam, namely polyamide 6, said polyamide being contained in a solid material W, the process comprising
(i) providing the solid material W containing the polyamide;
(ii) preparing a mixture M comprising the solid material W provided according to (i), one or more of an alkali metal compound and an alkaline earth metal compound, M further comprising an additive comprising a polyamide 66, wherein M contains the polyamide 66 comprised in the additive in an amount in the range of from 1 to 8 weight-%, based on the weight of the mixture M;
(iii) subjecting the mixture M prepared according to (ii) to depolymerization conditions in U_{D}, obtaining a gaseous mixture G1 comprising ε-caprolactam.

Preferably, the water content of the solid material W provided in (i) is lower than 5 weight-%, more preferably lower than 2 weight-%, more preferably in the range of from 0.2 to 1 weight-%, more preferably in the range of from 0.2 to lower than 1 weight-%, based on the weight of W.

As to the one or more of an alkali metal compound and an alkaline earth metal compound used in (ii), preferably M comprises an alkali metal compound or an alkaline earth metal compound, more preferably an alkali metal compound, more preferably an alkali metal hydroxide.

Preferably, the alkali metal hydroxide is potassium hydroxide or sodium hydroxide, more preferably potassium hydroxide.

In the context of the present invention, the alkali metal compound or the alkaline earth metal compound used in (ii) can be in the liquid or solid form, preferably in the solid form, at temperatures in the range of from 10 to 40 °C. For example, the alkali metal compound or the alkaline earth metal compound used in (ii) can be a solution or pellets, granules and the like. This is advantageous since the use of the alkali metal compound or the alkaline earth metal compound in solid form permits to use a single device for mixing the solid material W and the alkali metal compound or the alkaline earth metal compound and further eliminates the need for an additional step to remove water from the mixture M prior to (iii).

Preferably, M comprises the one or more of an alkali metal compound and an alkaline earth metal compound in an amount in the range of from 0.5 to 10 weight-%, more preferably in the range of from 1 to 5 weight-%, more preferably in the range of from 1.25 to 2.75 weight-%, based on the weight of the mixture M.

Preferably, (ii) is performed in U_{D}.

Preferably, (ii) comprises
(ii.1) introducing the solid material W provided according to (i), one or more of an alkali metal compound and an alkaline earth metal compound, and an additive comprising a polyamide 66 into a device D1, more preferably into a single device D1, comprised in U_{D}, wherein D1 is one or more of an extruder, a mixer and a stirred reactor, preferably an extruder;
(ii.2) bringing in contact the solid material W, the one or more of an alkali metal compound and an alkaline earth metal compound, and the additive in D1 at a temperature T_{E}, with T_{E} > T_{M}, T_{M} being the melting point of the polyamide comprised in W, obtaining a mixture M, preferably a melted mixture.

Preferably, wherein according to (ii), U_{D} consists of D1 and no device other than device D1 is involved in the preparation of mixture M.

Without wanting to be bound to any theory, the use of a single device D1 permits an increase in space-time-yield and minimizes investment costs.

More preferably, (ii) comprises
(ii.1) introducing the solid material W provided according to (i), one or more of an alkali metal compound and an alkaline earth metal compound, and an additive comprising a polyamide 66 into an extruder comprised in U_{D};
(ii.2) bringing in contact the solid material W, the one or more of an alkali metal compound and an alkaline earth metal compound, and the additive in said extruder at a temperature T_{E}, with T_{E} > T_{M}, T_{M} being the melting point of the polyamide comprised in W, obtaining a melted mixture M.

Without wanting to be bod to any theory, the use of the extruder for mixing and pre-heating (cf. steps (ii.1)-(ii.2)) permits a better processability and to reduce the depolymerization time (step (iii)).

In the context of the present invention, when D1 is an extruder, pellets/granules of the alkali metal compound or the alkaline earth metal compound can be used without impairing the depolymerization time.

More preferably, wherein according to (ii), U_{D} consists of an extruder and no device other than the extruder is involved in the preparation of mixture M.

Preferably, T_{E} is in the range of from 210 to 330 °C, more preferably in the range of from 220 to 310 °C, more preferably in the range of from 230 to 290 °C, more preferably in the range of from 240 to 270 °C.

In the context of the present invention, the melting point T_{M} of the polyamide comprised in W is determined according to DIN53765, preferably T_{M} of the polyamide (polyamide 6) comprised in W is about 220°C.

Preferably, (ii) is conducted in the device D1 at a pressure in the range of from 0.7 to 1.3 bar(abs), more preferably in the range of from 0.8 to 1.2 bar(abs), more preferably in the range of from 0.9 to 1.1 bar(abs).

Preferably from 98 to 100 weight-%, more preferably from 99 to 100 weight-%, more preferably from 99.5 to 100 weight-%, more preferably from 99.8 to 100 weight-%, of the mixture M consists of the solid material W provided according to (i), the one or more of an alkali metal compound and an alkaline earth metal compound, and the additive comprising a polyamide 66.

Preferably, the water content of the mixture M provided in (i) is lower than 5 weight-%, more preferably lower than 2 weight-%, more preferably lower than 1 weight-%, based on the weight of M.

Preferably, the depolymerization according to (iii) is performed at a temperature T_{D}, with T_{D} being in the range of from 230 to 320 °C, more preferably in the range of from 250 to 310 °C, more preferably in the range of from 260 to 300 °C.

Preferably, the depolymerization according to (iii) is performed at a pressure p_{D}, with p_{D} being in the range of from 1 to 150 mbar (abs), more preferably in the range of from 5 to 120 mbar (abs), more preferably in the range of from 10 to 100 mbar (abs).

Preferably, (iii) comprises
introducing the mixture M obtained according to (ii), more preferably according to (ii.2) as defined in the foregoing, in a depolymerization reactor R_{D} comprised in U_{D}, and subjecting M to depolymerization conditions, obtaining a gaseous mixture G1 comprising ε-caprolactam.

Preferably, the depolymerization reactor R_{D} of U_{D} is one or more of a kneading reactor and a stirred reactor, more preferably a kneading reactor.

Preferably, the depolymerization reactor R_{D} of U_{D} is a heated reactor.

Preferably, U_{D} comprises a device D1 and a depolymerization reactor R_{D}, with R_{D} being located downstream of D1.

Preferably, (ii) comprises
(ii.1) introducing the solid material W provided according to (i), one or more of an alkali metal compound and an alkaline earth metal compound, and an additive comprising a polyamide 66 into a device D1, more preferably being an extruder, comprised in U_{D};
(ii.2) bringing in contact the solid material W, the one or more of an alkali metal compound and an alkaline earth metal compound, and the additive in D1 at a temperature T_{E}, with T_{E} > T_{M}, T_{M} being the melting point of the polyamide comprised in W, obtaining a mixture M, preferably a melted mixture; and
(iii) comprises
   introducing the mixture M obtained according to (ii.2), preferably a melted mixture, in a depolymerization reactor R_{D}, more preferably being a kneading reactor, comprised in U_{D}, and subjecting M to depolymerization conditions, obtaining a gaseous mixture G1 comprising ε-caprolactam.

Preferably, depolymerization according to (iii) is performed for a duration in the range of from 1 to 240 min, more preferably in the range of from 15 to 150 min, more preferably in the range of from 20 to 100 min.

Preferably, the depolymerization according to (iii) is performed in the depolymerization reactor R_{D} for a duration in the range of from 1 to 240 min, more preferably in the range of from 15 to 150 min, more preferably in the range of from 20 to 100 min.

Preferably, M comprises, more preferably consists of waste material, wherein said waste material more preferably comprises textile waste material.

In the context of the present invention, the term "waste material" refers to any waste materials that contain polyamide prepared from caprolactam (polyamide 6). It can be from textile industry, automotive industry, plastic industry, packaging industry, etc.. Preferably, the term "waste material" refers to textile waste material.

In the context of the present invention, the term "textile waste material" refers to waste materials from for example clothing (yarns, fabrics, etc.), carpet, furniture.

Alternatively, the term "textile waste material" refers to waste materials from textile and fiber reinforced composites for example fishing nets.

Preferably from 30 to 99.5 weight-%, more preferably from 50 to 99.3 weight-%, more preferably from 65 to 99 weight-%, more preferably from 75 to 99 weight-%, of W consist of the polyamide 6.

Optionally, W further contains, in addition to the polyamide, one or more of at least one elastane, at least one polyethylene, at least one polyester, at least one polyurethane, at least one polyethylene terephthalate, at least one cellulose-based material including cotton, at least one glass fiber, and at least one rubber material including natural and synthetic rubber.

Preferably from 0 to 5 weight-%, more preferably from 0 to 2 weight-%, more preferably from 0 to 1 weight-%, more preferably from 0 to 0.1 weight-%, of W consists of polyamide 66. In other words, preferably W is substantially free, more preferably free of polyamide 66.

Preferably, W is in the form of pellets, granules, powder, flakes or agglomerates, more preferably in the form of pellets or agglomerates.

In the context of the present invention, the term "agglomerates" refers to particle agglomerates formed by a multitude of particles which are joined by weak physical interactions and/ or chemical bonding.

Preferably, the additive is polyamide 66.

Preferably, the additive is a copolymer comprising polyamide 66, more preferably a copolymer of polyamide 66 and polyamide 6.

Preferably, the weight ratio of polyamide 6 (PA6) relative to polyamide 66 (PA66) in the copolymer is in the range of from 1:1 to 10:1, more preferably in the range of from 1.5:1 to 5:1, more preferably in the range of from 1.5:1 to 3:1, more preferably in the range of from 1.5:1 to 2:1.

Preferably, the process further comprises
(iv) passing G1 comprising ε-caprolactam in a purification unit PU, obtaining a purified stream P2 comprising caprolactam, the concentration of ε-caprolactam C_{C2} in P2 > the concentration of ε-caprolactam C_{C1} in G1.

Preferably, PU is selected from the group consisting of a distillation unit, a crystallization unit, an extraction unit, a rectification unit, a filtration unit, an ion-exchange unit, a hydrogenation unit, an oxidation unit and a mixture of two or more thereof, more preferably selected from the group consisting of a distillation unit, a crystallization unit, and a mixture thereof.

Preferably, (iv) comprises
passing G1 comprising ε-caprolactam in a purification unit PU being a distillation unit, obtaining a purified stream P2 comprising ε-caprolactam, the concentration of ε-caprolactam C_{C2} in P2 > the concentration of ε-caprolactam C_{C1} in G1.

Preferably, as an alternative, PU comprises one or more purification sub-units.

Preferably, according to said alternative, (iv) comprises
(iv.1) passing G1 through a purification sub-unit PSU1 comprised in PU, obtaining a purified stream G11 comprising ε-caprolactam, the concentration of ε-caprolactam C_{C11} in G11> the concentration of ε-caprolactam C_{C1} in G1;
(iv.2) more preferably passing G11 obtained according to (iv.1) through a purification sub-unit PSU2 comprised in PU, PSU2 being located downstream of PSU1, obtaining a purified stream G12 comprising ε-caprolactam, the concentration of ε-caprolactam C_{C12} in G12> the concentration of ε-caprolactam C_{C11} in G11;
(iv.3) passing G11 obtained according to (iv.1), more preferably G12 obtained according to (iv.2), through a purification sub-unit PSU3 comprised in PU, PSU3 being located downstream of PSU1, and downstream of PSU2 if present, obtaining a purified stream P2 comprising ε-caprolactam, the concentration of ε-caprolactam C_{C2} in P2 > the concentration of ε-caprolactam C_{C11} in G11, preferably > the concentration of ε-caprolactam C_{C12} in G12.

Preferably, PSU1 is a distillation unit.

Preferably, PSU3 is a crystallization unit.

Preferably, PSU2 is a distillation unit.

In the context of the present invention, the purification according to (iv) of the present invention can be done according to any processes known in the art. For example, purification can be performed as disclosed in Tinge, J., et al., "Caprolactam," in Ullmann's Encyclopedia of industrial chemistry, Weinheim, Wiley-VCH Verlag GmbH & Co. KGaA, 2018, p. 17; US 5169870 A; US 5294707 A; US 5977193 A; Dmitrieva, L. A., et al., "Regeneration of epsilon-Caprolactam from wastes in the manufacture of polycaproamide fibres and yarns," Khimicheskie Volokna 1984, Vol. 4, p. 5-12; US 6093788 A; KR 101130461 B1 or US 2021/0040036 A1.

Preferably, the process of the present invention is a continuous process, a batch process or a semi continuous process, more preferably the process of the present invention is a continuous process.

Preferably, the process of the present invention consists of (i), (ii) and (iii), more preferably consists of (i), (ii), (iii) and (iv).

The present invention is further illustrated by the following set of aspects and combinations of aspects resulting from the dependencies and back-references as indicated. In particular, it is noted that in each instance where a range of aspects is mentioned, for example in the context of a term such as "The process of any one of the first to third aspect", every aspect in this range is meant to be explicitly disclosed for the skilled person, i.e. the wording of this term is to be understood by the skilled person as being synonymous to "The process of any one of the first, second and third aspect". Further, it is explicitly noted that the following set of aspects represents a suitably structured part of the general description directed to preferred aspects of the present invention, and, thus, suitably supports, but does not represent the claims of the present invention.

In a first aspect, the present invention provides a process for depolymerizing polyamide 6, said polyamide being contained in a solid material W, the process comprising
(i) providing the solid material W containing the polyamide;
(ii) preparing a mixture M comprising the solid material W provided according to (i), one or more of an alkali metal compound and an alkaline earth metal compound, M further comprising an additive comprising a polyamide 66, wherein M contains the polyamide 66 comprised in the additive in an amount in the range of from 1 to 8 weight-%, based on the weight of the mixture M;
(iii) subjecting the mixture M prepared according to (ii) to depolymerization conditions in a depolymerization unit U_{D}, obtaining a gaseous mixture G1 comprising ε-caprolactam.

In a second aspect, in the process of the first aspect, M comprises an alkali metal compound or an alkaline earth metal compound, preferably an alkali metal compound, more preferably an alkali metal hydroxide.

In a third aspect, in the process of the first and second aspect, M comprises the one or more of an alkali metal compound and an alkaline earth metal compound in an amount in the range of from 0.5 to 10 weight-%, preferably in the range of from 1 to 5 weight-%, more preferably in the range of from 1.25 to 2.75 weight-%, based on the weight of the mixture M.

In a fourth aspect, in the process of any one of first to third aspect, (ii) comprises
(ii.1) introducing the solid material W provided according to (i), one or more of an alkali metal compound and an alkaline earth metal compound, and an additive comprising a polyamide 66 into a device D1 comprised in U_{D}, wherein D1 is one or more of an extruder, a mixer and a stirred reactor, preferably an extruder;
(ii.2) bringing in contact the solid material W, the one or more of an alkali metal compound and an alkaline earth metal compound and the additive in D1 at a temperature T_{E}, with T_{E} > T_{M}, T_{M} being the melting point of the polyamide comprised in W, obtaining a mixture M, preferably a melted mixture.

In a fifth aspect, in the process of the fourth aspect, T_{E} is in the range of from 210 to 330 °C, preferably in the range of from 220 to 310 °C, more preferably in the range of from 230 to 290 °C, more preferably in the range of from 240 to 270 °C.

In a sixth aspect, in the process of any one of the first to the fifth aspect, the depolymerization according to (iii) is performed at a temperature T_{D}, with T_{D} being in the range of from 230 to 320 °C, preferably in the range of from 250 to 310 °C, more preferably in the range of from 260 to 300 °C.

In a seventh aspect, in the process of any one of the first to the sixth aspect, the depolymerization according to (iii) is performed at a pressure p_{D}, with p_{D} being in the range of from 1 to 150 mbar(abs), preferably in the range of from 5 to 120 mbar(abs), more preferably in the range of from 10 to 100 mbar(abs).

In an eighth aspect, in the process of any one of the first to the seventh aspect, (iii) comprises introducing the mixture M obtained according to (ii), preferably according to (ii.2), in a depolymerization reactor R_{D} comprised in U_{D}, and subjecting M to depolymerization conditions, obtaining a gaseous mixture G1 comprising ε-caprolactam.

In a ninth aspect, in the process of any one of the first to eighth aspect, depolymerization according to (iii) is performed for a duration in the range of from 1 to 240 min, preferably in the range of from 15 to 150 min, more preferably in the range of from 20 to 100 min.

In a tenth aspect, in the process of any one of the first to the ninth aspect, M comprises, preferably consists of waste material, wherein said waste material preferably comprises textile waste material.

In an eleventh aspect, in the process of any one of the first to the tenth aspect, from 30 to 99.5 weight-%, preferably from 50 to 99.3 weight-%, more preferably from 65 to 99 weight-%, more preferably from 75 to 99 weight-%, of W consist of the polyamide.

In a twelfth aspect, in the process of any one of the first to the eleventh aspect, preferably of the eleventh aspect, W further contains, in addition to the polyamide, one or more of at least one elastane, at least one polyethylene, at least one polyester, at least one polyurethane, at least one polyethylene terephthalate, at least one cellulose-based material including cotton, at least one glass fiber, and at least one rubber material including natural and synthetic rubber.

In a thirteenth aspect, in the process of any one of the first to the twelfth aspect, W is in the form of pellets, granules, powder, flakes or agglomerates, preferably in the form of pellets or agglomerates.

In a fourteenth aspect, in the process of any one of the first to the thirteenth aspect, the additive is polyamide 66.

In a fifteenth aspect, in the process of any one of the first to the thirteenth aspect, the additive is a copolymer comprising a polyamide 66, preferably a copolymer of polyamide 66 and polyamide 6.

In a sixteenth aspect, the process of any one of the first to the fifteenth aspect further comprises
(iv) passing G1 comprising ε-caprolactam in a purification unit PU, obtaining a purified stream P2 comprising ε-caprolactam, the concentration of ε-caprolactam C_{C2} in P2 > the concentration of ε-caprolactam C_{C1} in G1.

In a seventeenth aspect, in the process according to the sixteenth aspect, PU is selected from the group consisting of a distillation unit, a crystallization unit, an extraction unit, a rectification unit, a filtration unit, an ion-exchange unit, a hydrogenation unit, an oxidation unit and a mixture of two or more thereof, preferably selected from the group consisting of a distillation unit, a crystallization unit, and a mixture thereof.

In an eighteenth aspect, the process according to the sixteenth or seventeenth aspect further comprises
(iv) passing G1 comprising ε-caprolactam in a purification unit PU being a distillation unit, obtaining a purified stream P2 comprising ε-caprolactam, the concentration of ε-caprolactam C_{C2} in P2 > the concentration of ε-caprolactam C_{C1} in G1.

In a nineteenth aspect, in the process according to the sixteenth or seventeenth aspect, (iv) comprises
(iv.1) passing G1 through a purification sub-unit PSU1 comprised in PU, obtaining a purified stream G11 comprising ε-caprolactam, the concentration of ε-caprolactam C_{C11} in G11> the concentration of ε-caprolactam C_{C1} in G1;
(iv.2) preferably passing G11 obtained according to (iv.1) through a purification sub-unit PSU2 comprised in PU, PSU2 being located downstream of PSU1, obtaining a purified stream G12 comprising ε-caprolactam, the concentration of ε-caprolactam C_{C12} in G12> the concentration of ε-caprolactam C_{C11} in G11;
(iv.3) passing G11 obtained according to (iv.1), preferably G12 obtained according to (iv.2), through a purification sub-unit PSU3 comprised in PU, PSU3 being located downstream of PSU1, and downstream of PSU2 if present, obtaining a purified stream P2 comprising ε-caprolactam, the concentration of ε-caprolactam C_{C2} in P2 > the concentration of ε-caprolactam C_{C11} in G11, preferably > the concentration of ε-caprolactam C_{C12} in G12.

In a twentieth aspect, in the process according to the nineteenth aspect, PSU1 is a distillation unit.

In a twenty-first aspect, in the process according to the nineteenth or twentieth aspect, PSU3 is a crystallization unit.

In a twenty-second aspect, in the process according to the twentieth or twenty-first aspect, PSU2 is a distillation unit.

In a twenty-third aspect, the process of any one of the first to twenty-second aspect is a continuous process, a batch process or a semi continuous process, preferably a continuous process.

In a twenty-fourth aspect, the process of any one of the first to twenty-third aspect consists of (i), (ii) and (iii), preferably consists of (i), (ii), (iii) and (iv).

In the context of the present invention, it is noted that the term "polyamide prepared from "caprolactam" as used herein refers to "polyamide 6" being characterized by the formula (-NH-(CH₂)₅-CO-)ₙ.

Further, In the context of the present invention, it is noted that polyamide 66 is characterized by the formula (-CO-(CH₂)₄-CO-NH-(CH₂)₆-NH)ₙ.

In the context of the present invention, the depolymerization conditions are the depolymerization conditions of polyamide 6.

In the context of the present invention, it is noted that the additive and the solid material W comprising the polyamide prepared from caprolactam (polyamide 6) are two distinct materials.

In the context of the present invention, the term "caprolactam" and "ε-caprolactam" are used interchangeably.

In the context of the present invention, the term "gas mixture" or "gaseous mixture" refers to a mixture in the gas or gaseous phase. Similarly, the term "liquid mixture" refers to a mixture in the liquid phase.

In the context of the present invention, the term "stream" refers to a stream which can be made of liquid component(s), gas component(s) and/or solid component(s).

In the context of the present invention, a term "X is one or more of A, B and C", wherein X is a given feature and each of A, B and C stands for specific realization of said feature, is to be understood as disclosing that X is either A, or B, or C, or A and B, or A and C, or B and C, or A and B and C. In this regard, it is noted that the skilled person is capable of transfer to above abstract term to a concrete example, e.g. where X is a chemical element and A, B and C are concrete elements such as Li, Na, and K, or X is a temperature and A, B and C are concrete temperatures such as 10 °C, 20 °C, and 30 °C. In this regard, it is further noted that the skilled person is capable of extending the above term to less specific realizations of said feature, e.g. "X is one or more of A and B" disclosing that X is either A, or B, or A and B, or to more specific realizations of said feature, e.g. "X is one or more of A, B, C and D", disclosing that X is either A, or B, or C, or D, or A and B, or A and C, or A and D, or B and C, or B and D, or C and D, or A and B and C, or A and B and D, or B and C and D, or A and B and C and D.

The present invention is further illustrated by the following examples.

### Examples

PA stands for polyamide
PA6 stands for polyamide 6 or nylon-6
PA66 stands for polyamide 66 or nylon-66
PA12 stands for polyamide 12 or nylon-12
PE stands for polyethylene
Spandex : a commercially available elastomeric polyurethane with at least 85 wt.-% of segmented polyurethane/ polyurethane block polymer on the basis of polyurethane, polyester and/or polycarbonates. Spandex fibers can also be preferred as described in US 4973647 A, EP 0343985 A2, US 6639041 B2 and WO 03/010216 A1.

### Reference Example 1: Sample preparation with Micro-compounder

The parameters for sample preparation in the examples of the present invention with a micro-compounder are shown in Table 1 below.

**Table 1 Mixing parameters for Micro-compounder**

| | |
|---|---|
| Instrument | DSM Research 15 cm³ Micro-compounder TS/I-02 |
| Sample Size | 17g in total, sample composition according to experiment, each experiment contains 2% KOH |
| Inner temperature | 260 °C |
| Speed | 100 rpm |
| Mixing time | 4 min |
| Pressure | Atmospheric pressure |

### Reference Example 2: Thermogravimetric analysis (TGA)

The parameters used for the TGA measurements are listed in Table 2 below.

**Table 2 TGA measurement parameters**

| | |
|---|---|
| Instrument | TGA Q5000 V3.17 Build 265 |
| Sample Size | 5-8 mg |
| Balance Gas | Nitrogen 20.0 ml/min |
| Sample Gas | Nitrogen 50.0 ml/min |
| Temperature Program | Equilibrate at 40 °C |
| | Ramp 100 °C/min to 290 °C |
| | Isothermal for 180 min |

### Reference Example 3: Alkaline depolymerization of different polyamides

Sample mixtures containing 2 weight-% KOH or NaOH and 98 weight-% of PA6 or of other PA6 containing materials (see Table 3) were mixed for 4 min at 260 °C (inner temperature) and stirred at 100 rpm in a micro-compounder. Afterwards the melt is cooled to room temperature and transferred to a TGA measurement. In TGA, the temperature is equilibrated at 40°C, then raised to 290°C with a rate of 100°C/min. Afterwards, the sample is kept isothermal at 290°C for 3h. The relative weight over time is detected.

**Table 3 Tested materials and their PA content**

| **Ref. Example** | **Material** | **Main Composition (Polymeric material)** | **PA content according to NMR [wt.-%]** | **Depolymerization in presence of** |
|---|---|---|---|---|
| 3.1 | Polyamide | PA6 | 99 | KOH |
| 3.2 | Fishing net | PA6, PE | 86 | KOH |
| 3.3 | PA6/Spandex | PA6, Spandex | 77 | KOH |
| 3.4 | Yarns (colorless) | PA6 | 95 | KOH |
| 3.5 | Fabrics (colorless) | PA6 | 95 | KOH |
| 3.6 | Fabrics (colored) | PA6 | 96 | KOH |
| 3.7 | Polyamide | PA6 | 99 | NaOH |

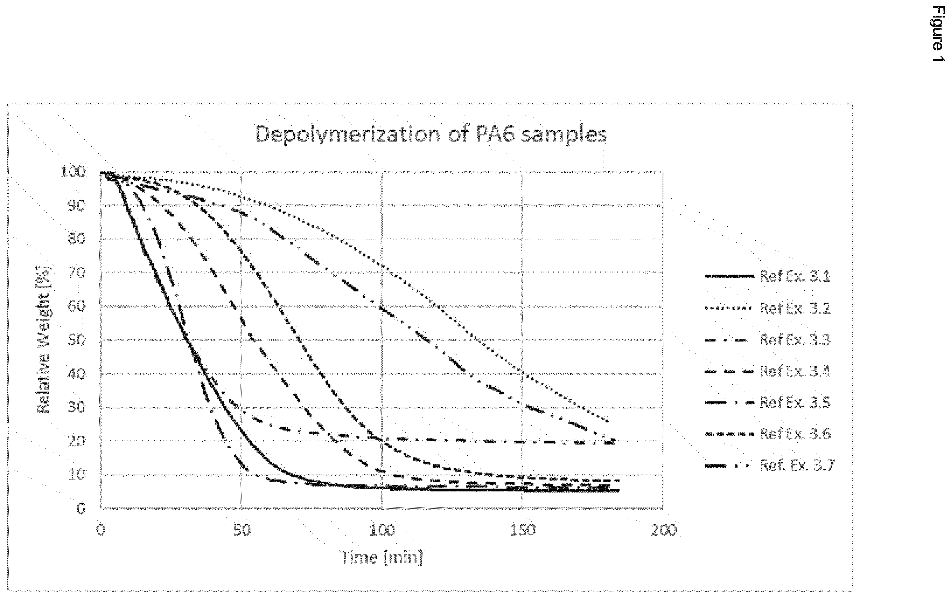

Figure 1 plots the TGA curves of the alkaline depolymerization of PA6 and various PA6 containing materials using KOH or NaOH. Most end of life products with a high PA6 content (> 90%) require an increased residence time compared to virgin PA6 that results in prolonged reaction time. As can be seen from Figure 1, the chemical composition of the base for depolymerization also has an influence on the depolymerization time.

### Comparative Example 1: Alkaline depolymerization of PA6 with 15 wt.-% PA12 based on the obtained mixture

A mixture was prepared containing 2 wt.-% KOH and 83 wt.-% of PA6. Further, PA12 was added to KOH/PA6 mixture in an amount of 15 wt.-% based on the sum of the weight of KOH, the weight of PA6 and the weight of PA12. The obtained mixture had a weight ratio of KOH : PA6 : PA12 of 2: 83: 15. Said mixture was mixed for 4 min at 260°C (inner temperature) and stirred at 100 rpm in a micro-compounder as described in Reference Example 1. Afterwards the obtained mixture (melt) was cooled down to room temperature and transferred to a TGA measurement unit (reactor). During the TGA measurement, the temperature was equilibrated at 40°C, then raised to 290°C with a rate of 100°C/min. Afterwards, the sample was kept isothermal at 290°C for 3h as described in Reference Example 2. The relative weight over time was measured.

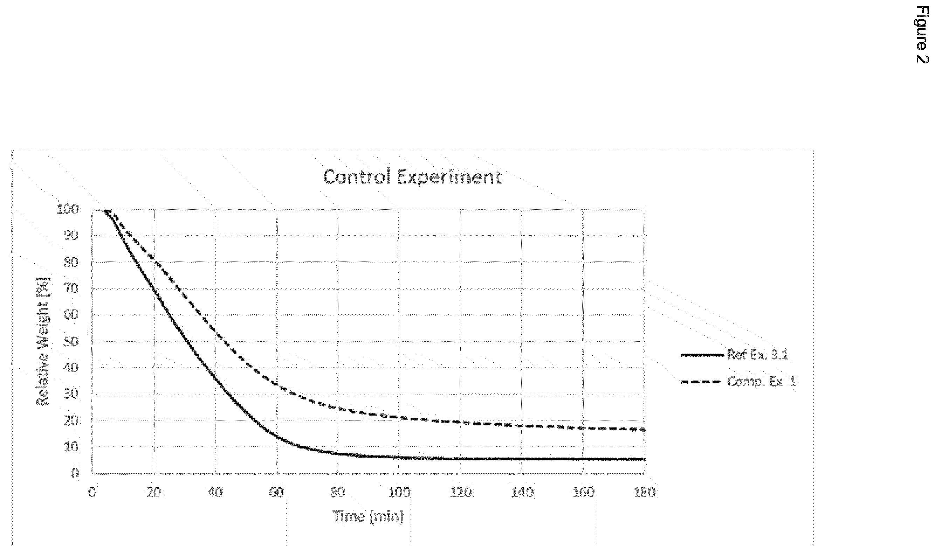

Figure 2 shows the TGA curve for PA6 depolymerization compared to the TGA curve for PA6 decomposition in presence of 15 wt.-% PA 12 based on the sum of the weight of KOH, the weight of PA6 and the weight of PA12. As can be seen from the TGA curve, from 50 min, the TGA curve for the mixture PA6 + PA12 is above the reference TGA curve, showing that a lower depolymerization is obtained when PA6 is combined with PA12.

### Example 1: Alkaline depolymerization of PA with PA66 - Testing

Mixtures were prepared with a weight ratio of KOH : PA6 containing material : PA66 being 2 : 98-x : x, with x being in the range of from 1 to 25. Each obtained mixture was mixed for 4 min at 260 °C (inner temperature) and stirred at 100 rpm in a micro-compounder as described in Reference Example 1. All PA6 containing materials subjected to depolymerization according to, or not according to, the invention are listed in Table 4. Afterwards the obtained mixture (melt) was cooled down to room temperature (about 20°C) and transferred to a TGA measurement unit (reactor). During each TGA measurement, the temperature was equilibrated at 40°C, then raised to 290°C with a rate of 100°C/min. Afterwards, each sample was kept isothermal at 290°C for 3h as described in Reference Example 2. The relative weight over time was measured.

**Table 4 Overview of tested materials (inventive + reference)**

| Example | PA6 material | Composition | PA6 content [wt.-%]* | PA66 [wt.-%]** |
|---|---|---|---|---|
| Ex. 1.1a | Polyamide | PA6 | 99 | 1 |
| Ex. 1.1b | Polyamide | PA6 | 99 | 2 |
| Ex. 1.1c | Polyamide | PA6 | 99 | 5 |
| Ex. 1.1d | Polyamide | PA6 | 99 | 7 |
| Ex. 1.1e*** | Polyamide | PA6 | 99 | 25 |
| Ref. Ex. 3.1 | Polyamide | PA6 | 99 | - |
| Ex. 1.2a | Fishing net | PA6, PE | 86 | 2 |
| Ex. 1.2b | Fishing net | PA6, PE | 86 | 5 |
| Ref. Ex. 3.2 | Fishing net | PA6, PE | 86 | - |
| Ex. 1.3a | PA6/Spandex | PA6, Spandex | 77 | 2 |
| Ex. 1.3b | PA6/Spandex | PA6, Spandex | 77 | 5 |
| Ref. Ex. 3.3 | PA6/Spandex | PA6, Spandex | 77 | - |
| Ex. 1.4a | Yarns (colorless) | PA6 | 95 | 2 |
| Ex. 1.4b | Yarns(colorless) | PA6 | 95 | 5 |
| Ref. Ex. 3.4 | Yarns(colorless) | PA6 | 95 | - |
| Ex. 1.5a | Fabrics (colorless) | PA6 | 95 | 2 |
| Ex. 1.5b | Fabrics (colorless) | PA6 | 95 | 5 |
| Ref. Ex. 3.5 | Fabrics (colorless) | PA6 | 95 | - |
| Ex. 1.6a | Fabrics (colored) | PA6 | 96 | 2 |
| Ex. 1.6b | Fabrics (colored) | PA6 | 96 | 5 |
| Ref. Ex. 3.6 | Fabrics (colored) | PA6 | 96 | - |

| | | | | |
|---|---|---|---|---|
| *based on the weight of the PA6 containing material **based on the weight of the obtained mixture (= sum of the weight of KOH, the weight of PA6 containing material and the weight of PA66) *** illustrative example outside the scope of the claims | | | | |

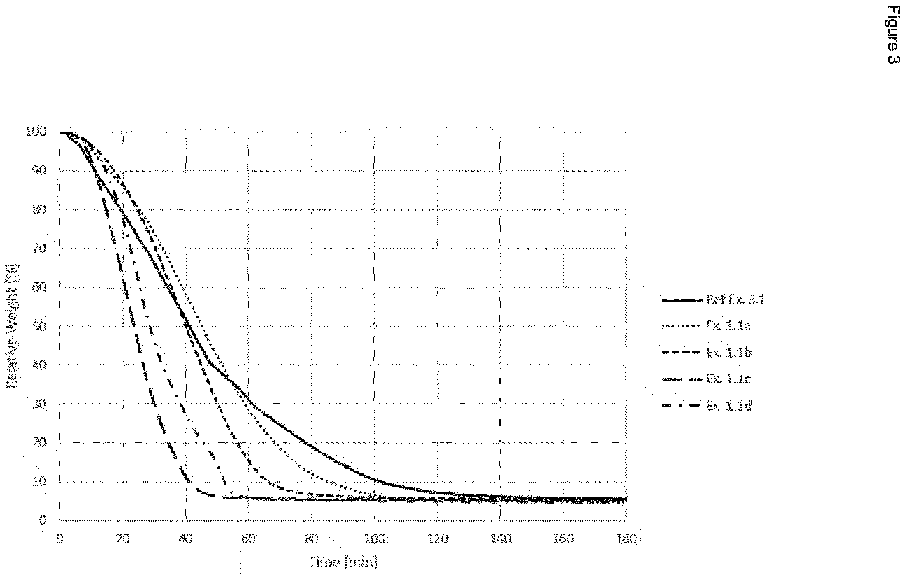

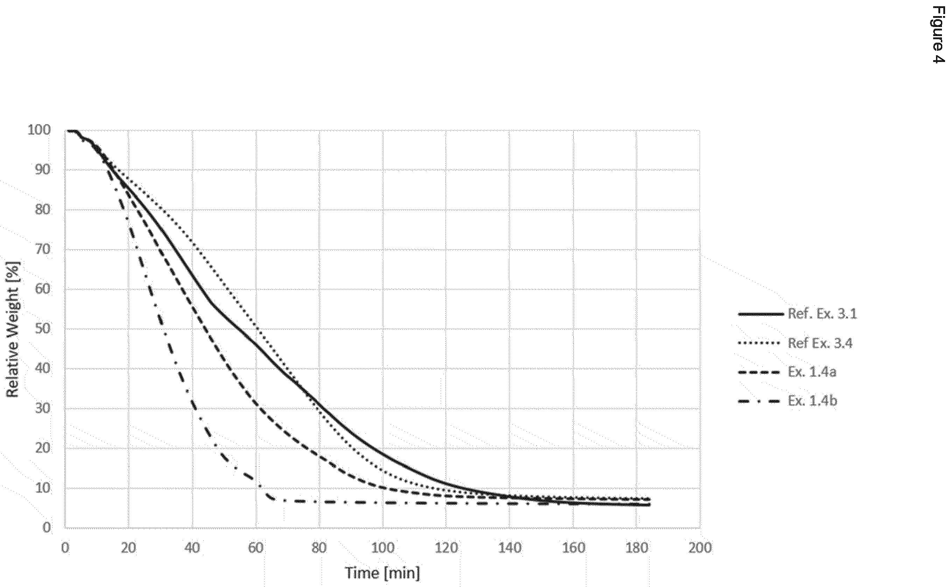

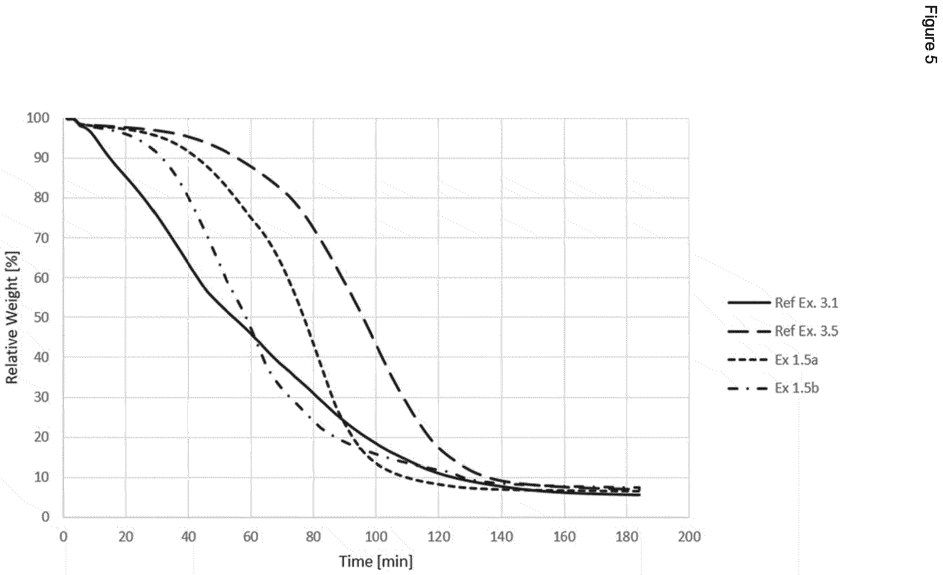

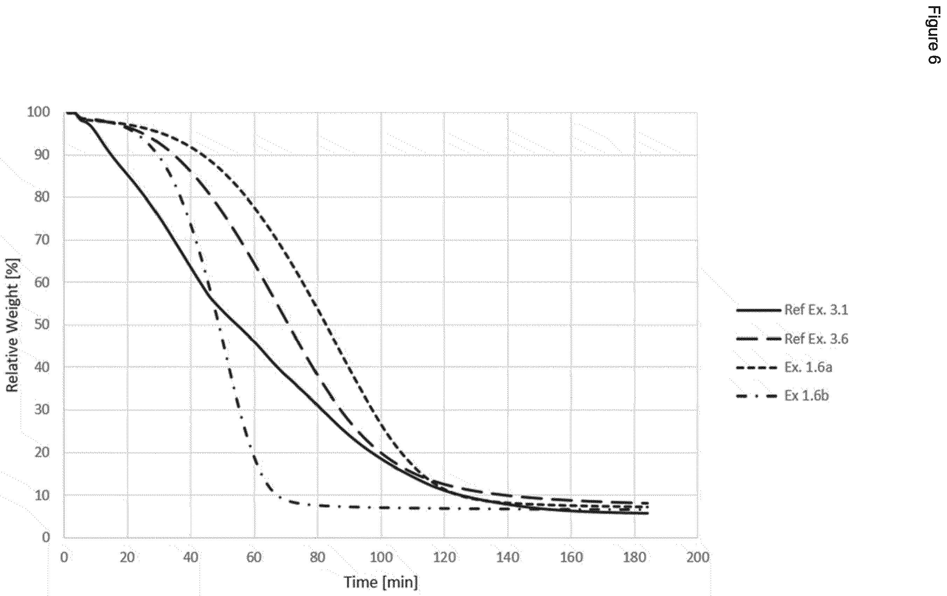

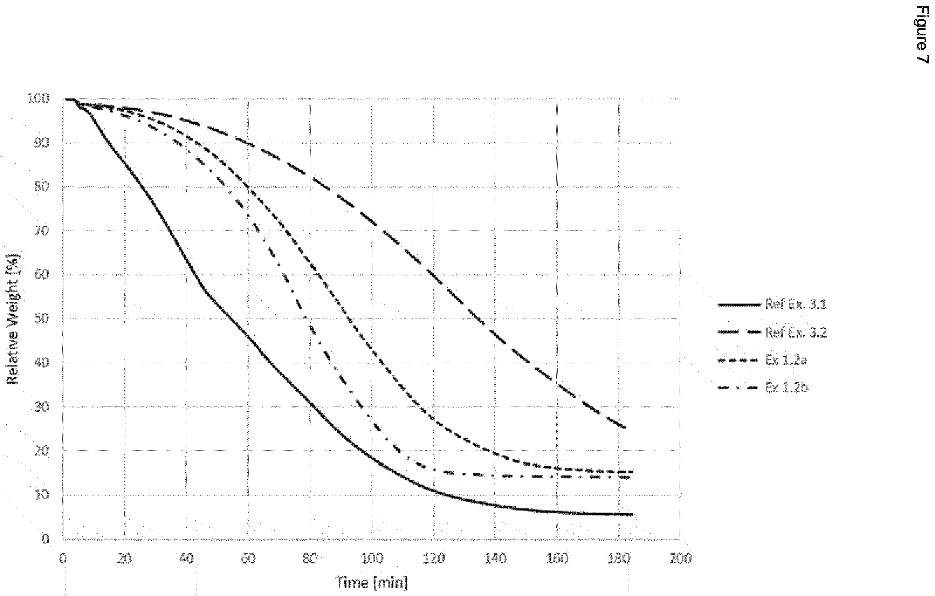

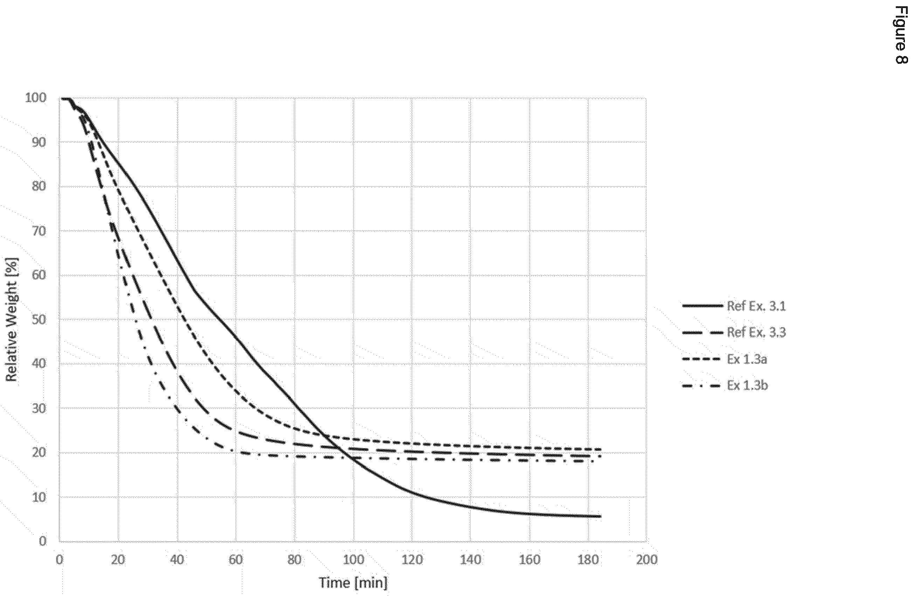

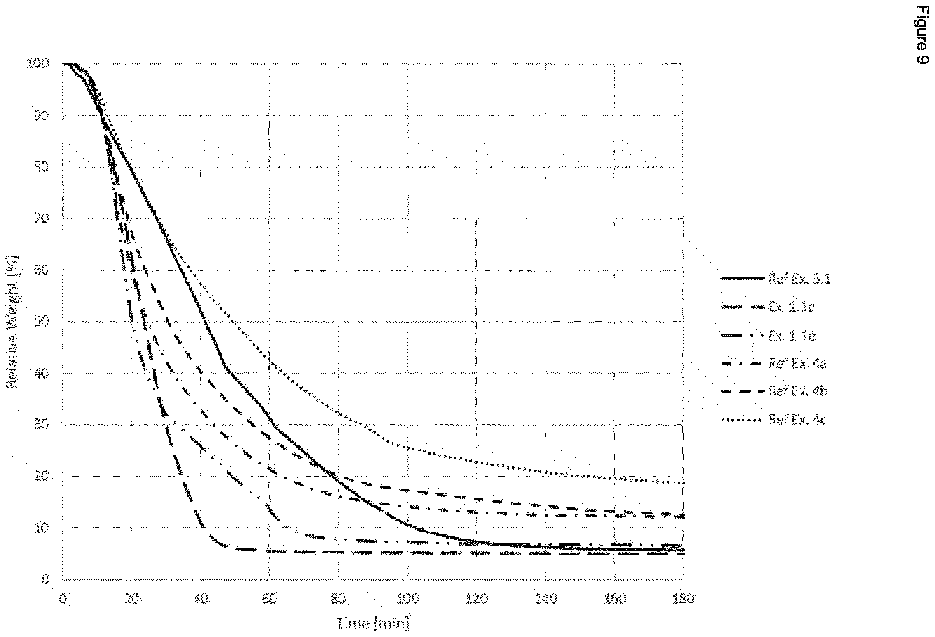

Figures 3 to 8 show the TGA curves for depolymerization of PA6 in the different material in comparison to pure PA6. It is believed that the addition of PA66 as an additive to the depolymerization mixture significantly accelerates depolymerization as can be seen in Figure 3. The effect is observed even at PA66 concentration of 1 wt.-%. When using from 1 to 5 wt.-% of PA66 based on the sum of the weight of KOH, the weight of PA6 containing material and the weight of PA66, the accelerating effect increases with increasing PA66 amount. With the addition of 5wt.-% PA66, complete depolymerization is about 2.5 times faster than for neat PA6 (about 50 min vs. 130 min). With the addition of 2 wt.-% PA66, the reaction is about 1.8 times faster than for neat PA6. When using 25 wt.-% PA66, as may be taken from Figure 9, the depolymerization reaction is about 2 times faster than for neat PA6. In order to determine what would be the maximum amount of PA66 to be used to maintain its effect, a further example has been prepared and is described in the following.

### Reference Example 4: Alkaline depolymerization of PA6 with 40-80wt.-% PA66 based on the weight of the obtained mixture

Mixtures were prepared with a weight ratio of KOH : PA6 containing material : PA66 being 2 : 98-x : x, with x being in the range of from 40 to 80. Each obtained mixture was mixed for 4 min at 260 °C (inner temperature) and stirred at 100 rpm in a micro-compounder as described in Reference Example 1. The tested materials are listed in Table 5 below. Afterwards the obtained mixture (melt) was cooled down to room temperature (about 20°C) and transferred to a TGA measurement. During each TGA measurement, the temperature was equilibrated at 40°C, then raised to 290°C with a rate of 100°C/min. Afterwards, each sample was kept isothermal at 290°C for 3h as described in Reference Example 2. The relative weight over time was measured. Example 1.1c and Illustrative Example 1.1e are also listed in Table 5 for comparison.

**Table 5 Overview of tested materials (inventive + reference)**

| Example | PA6 material | Composition | PA6 content [wt.-%]* | PA66 [wt.-%]** |
|---|---|---|---|---|
| Ex. 1.1c | Polyamide | PA6 | 99 | 5 |
| Ex. 1.1e*** | Polyamide | PA6 | 99 | 25 |
| Ref. Ex. 4.a | Polyamide | PA6 | 99 | 40 |
| Ref. Ex. 4.b | Polyamide | PA6 | 99 | 60 |
| Ref. Ex. 4.c | Polyamide | PA6 | 99 | 80 |

| | | | | |
|---|---|---|---|---|
| *based on the weight of the PA6 material ** based on the weight of the obtained mixture (= sum of the weight of KOH, the weight of PA6 containing material and the weight of PA66) *** illustrative example outside the scope of the claims | | | | |

Figure 9 show the TGA curves for depolymerization of PA6 in presence of a base (KOH) and of 5, 25, 40, 60 and 80 wt.-% of PA66 based on the weight of the obtained mixture in comparison to pure PA6 depolymerized in presence of a base, KOH. As may be taken from this figure, when using 40 wt.-% or more of PA66 for the depolymerization of PA6, the degree of depolymerization is decreased and the reaction time is increased which is no longer acceptable for industrial process.

### Description of the figures

- **Figure 1**: shows for the depolymerization of PA6 alone and of various PA6-containing materials.
- **Figure 2**: shows TGA curves for the depolymerization of PA6 alone and of PA6 in presence of 15 wt.-% PA12 based on the weight of the obtained mixture.
- **Figure 3**: shows TGA curves for the depolymerization of PA6 alone and of PA6 in presence of 1 to 7 wt.-% PA66 based on the weight of the obtained mixture.
- **Figure 4**: shows TGA curves for the depolymerization of PA6 alone and of a PA6-containing colorless yarn with and without addition of PA66.
- **Figure 5**: shows TGA curves for the depolymerization of PA6 alone and of a PA6-containing colorless fabrics with and without addition of PA66.
- **Figure 6**: shows TGA curves for the depolymerization of PA6 alone and of a PA6-containing colored fabrics with and without addition of PA66.
- **Figure 7**: shows TGA curves for the depolymerization of PA6 alone and of a PA6-containing fishing net with and without addition of PA66.
- **Figure 8**: shows TGA curves for the depolymerization of PA6 alone and of a mixture of PA6 and Spandex with and without addition of PA66.
- **Figure 9**: shows TGA curves for the depolymerization of PA6 alone and in presence of 5, 25, 40, 60 and 80 weight.-% of PA66 based on the weight of the obtained mixture.

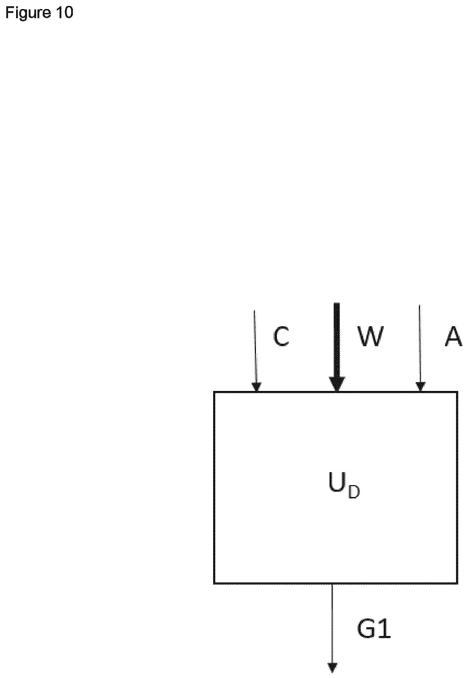

- **Figure 10**: is a schematic representation of a production unit used for the process according to an embodiment of the invention.

The production unit comprises a depolymerization unit U_{D}. A solid material W containing a polyamide prepared from caprolactam is introduced into U_{D} as well as C, i.e. one or more of an alkali metal compound and an alkaline earth metal compound, and an additive A comprising polyamide 66, for forming a mixture which is subjected to depolymerization conditions into U_{D}, obtaining a gaseous mixture G1 comprising caprolactam removed from U_{D}.

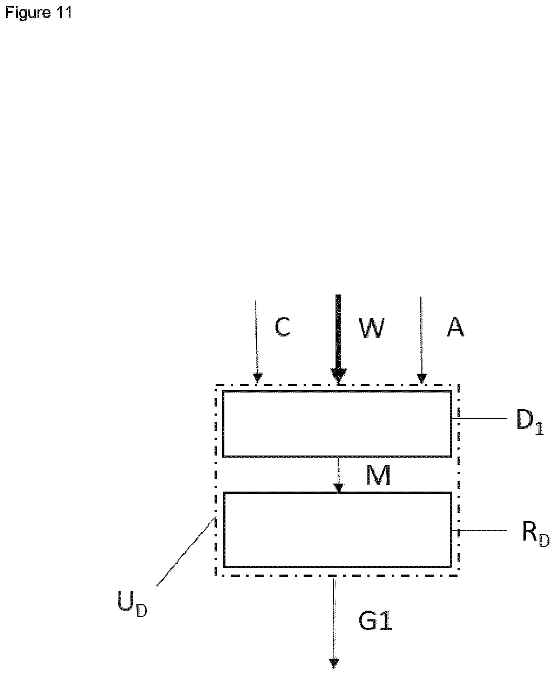

- **Figure 11**: is a schematic representation of a production unit used for the process according to preferred embodiments of the invention.

The production unit comprises a depolymerization unit U_{D} comprising a device D1 and a polymerization reactor R_{D}. D1 is located upstream of R_{D}. A solid material W containing a polyamide prepared from caprolactam is introduced into D1, preferably an extruder, of U_{D} as well as C, i.e. one or more of an alkali metal compound and an alkaline earth metal compound, and an additive A comprising polyamide 66, for forming a mixture M. The mixture M is removed from D1 and then passed through R_{D}, preferably a kneading reactor, and subjected to depolymerization conditions therein for obtaining a gaseous mixture G1 comprising caprolactam, which is then removed from R_{D} and U_{D}.

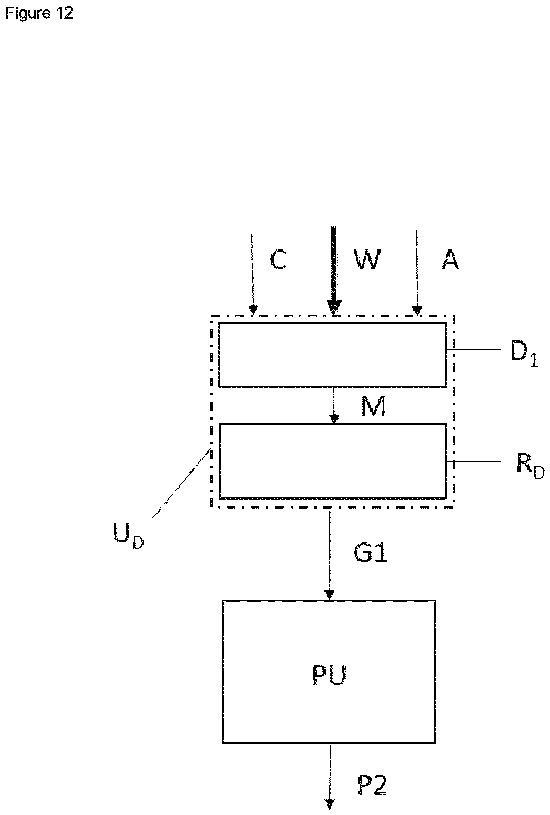

- **Figure 12**: is a schematic representation of a production unit used for the process according to preferred embodiments of the invention.

The production unit comprises a depolymerization unit U_{D}, comprising a device D1 and a polymerization reactor R_{D}, and a purification unit PU. A solid material W containing a polyamide prepared from caprolactam is introduced into D1, preferably an extruder, of U_{D} as well as C, i.e. one or more of an alkali metal compound and an alkaline earth metal compound, and an additive A comprising polyamide 66, for forming a mixture M. The mixture M is removed from D1 and then passed through R_{D}, preferably a kneading reactor, and subjected to depolymerization conditions therein for obtaining a gaseous mixture G1 comprising caprolactam, which is then removed from R_{D} and U_{D}. The gaseous mixture G1 is then passed through PU for obtaining a purified stream P2 comprising caprolactam, which is then removed from PU, the concentration of caprolactam C_{C2} in P2 > the concentration of caprolactam C_{C1} in G1.

## Claims

1. A process for depolymerizing polyamide 6, said polyamide being contained in a solid material W, the process comprising
(i) providing the solid material W containing the polyamide;
(ii) preparing a mixture M comprising the solid material W provided according to (i), and one or more of an alkali metal compound and an alkaline earth metal compound, M further comprising an additive comprising a polyamide 66, wherein M contains the polyamide 66 comprised in the additive in an amount in the range of from 1 to 8 weight-%, based on the weight of the mixture M;
(iii) subjecting the mixture M prepared according to (ii) to depolymerization conditions in a depolymerization unit U_{D}, obtaining a gaseous mixture G1 comprising ε-caprolactam.

2. The process of claim 1, wherein M comprises an alkali metal compound or an alkaline earth metal compound, preferably an alkali metal compound, more preferably an alkali metal hydroxide.

3. The process of claim 1 or 2, wherein M comprises the one or more of an alkali metal compound and an alkaline earth metal compound in an amount in the range of from 0.5 to 10 weight-%, preferably in the range of from 1 to 5 weight-%, more preferably in the range of from 1.25 to 2.75 weight-%, based on the weight of the mixture M.

4. The process of any one of claims 1 to 3, wherein (ii) comprises
(ii.1) introducing the solid material W provided according to (i), one or more of an alkali metal compound and an alkaline earth metal compound, and an additive comprising a polyamide 66 into a device D1 comprised in U_{D}, wherein D1 is one or more of an extruder, a mixer and a stirred reactor, preferably an extruder;
(ii.2) bringing in contact the solid material W, the one or more of an alkali metal compound and an alkaline earth metal compound and the additive in D1 at a temperature T_{E}, with T_{E} > T_{M}, T_{M} being the melting point of the polyamide comprised in W, obtaining a mixture M, preferably a melted mixture.

5. The process of claim 3 or 4, wherein T_{E} is in the range of from 230 to 320 °C, preferably in the range of from 250 to 310 °C, more preferably in the range of from 260 to 300 °C.

6. The process of any one of claims 1 to 5, wherein the depolymerization according to (iii) is performed at a temperature T_{D}, with T_{D} being in the range of from 230 to 320 °C, preferably in the range of from 250 to 310 °C, more preferably in the range of from 260 to 300 °C.

7. The process of any one of claims 1 to 6, wherein the depolymerization according to (iii) is performed at a pressure p_{D}, with p_{D} being in the range of from 1 to 150 mbar (abs), preferably in the range of from 5 to 120 mbar (abs), more preferably in the range of from 10 to 100 mbar (abs).

8. The process of any one of claims 1 to 7, wherein (iii) comprises introducing the mixture M obtained according to (ii), preferably according to (ii.2), in a depolymerization reactor R_{D} comprised in U_{D}, and subjecting M to depolymerization conditions, obtaining a gaseous mixture G1 comprising ε-caprolactam.

9. The process of any one of claims 1 to 8, wherein depolymerization according to (iii) is performed for a duration in the range of from 1 to 240 min, preferably in the range of from 15 to 150 min, more preferably in the range of from 20 to 100 min.

10. The process of any one of claims 1 to 9, wherein the additive is polyamide 66; or wherein the additive is a copolymer comprising a polyamide 66, wherein preferably the additive is a copolymer of polyamide 66 and polyamide 6.

11. The process of any one of claims 1 to 10, further comprising
(iv) passing G1 comprising ε-caprolactam in a purification unit PU, obtaining a purified stream P2 comprising ε-caprolactam, the concentration of ε-caprolactam C_{C2} in P2 > the concentration of ε-caprolactam C_{C1} in G1;
wherein PU preferably is selected from the group consisting of a distillation unit, a crystallization unit, an extraction unit, a rectification unit, a filtration unit, an ion-exchange unit, a hydrogenation unit, an oxidation unit and a combination of two or more thereof, more preferably selected from the group consisting of a distillation unit, a crystallization unit, and a combination thereof.

12. The process of claim 11, wherein (iv) comprises
(iv.1) passing G1 through a purification sub-unit PSU1 comprised in PU, PSU1 preferably being a distillation unit, obtaining a purified stream G11 comprising ε-caprolactam, the concentration of ε-caprolactam C_{C11} in G11 > the concentration of ε-caprolactam C_{C1} in G1;
(iv.2) preferably passing G11 obtained according to (iv.1) through a purification sub-unit PSU2 comprised in PU, PSU2 being located downstream of PSU1, PSU2 preferably being a distillation unit, obtaining a purified stream G12 comprising ε-caprolactam, the concentration of ε-caprolactam C_{C12} in G12 > the concentration of ε-caprolactam C_{C11} in G11;
(iv.3) passing G11 obtained according to (iv.1), preferably G12 obtained according to (iv.2), through a purification sub-unit PSU3 comprised in PU, PSU3 being located downstream of PSU1, and downstream of PSU2 if present, PSU3 preferably being a crystallization unit, obtaining a purified stream P2 comprising ε-caprolactam, the concentration of ε-caprolactam C_{C2} in P2 > the concentration of caprolactam C_{C11} in G11, preferably > the concentration of ε-caprolactam C_{C12} in G12.

## Patentansprüche

1. Ein Verfahren zur Depolymerisation von Polyamid 6, wobei das Polyamid in einem festen Material W enthalten ist, wobei das Verfahren umfasst
(i) Bereitstellen des festen Materials W, das das Polyamid enthält;
(ii) Herstellen einer Mischung M, die das gemäß (i) bereitgestellte feste Material W und eine oder mehrere einer Alkalimetallverbindung und einer Erdalkalimetallverbindung umfasst, wobei M ferner ein Additiv umfasst, das ein Polyamid 66 enthält,
wobei M das in dem Additiv enthaltene Polyamid 66 in einer Menge im Bereich von 1 bis 8 Gewichts-%, bezogen auf das Gewicht der Mischung M, enthält;
(iii) Unterwerfen der gemäß (ii) hergestellten Mischung M unter Depolymerisationsbedingungen in einer Depolymerisationseinheit U_{D}, wobei eine gasförmige Mischung G1 erhalten wird, die ε-Caprolactam umfasst.

2. Das Verfahren nach Anspruch 1, wobei M eine Alkalimetallverbindung oder eine Erdalkalimetallverbindung umfasst, vorzugsweise eine Alkalimetallverbindung, besonders bevorzugt ein Alkalimetallhydroxid.

3. Das Verfahren nach Anspruch 1 oder 2, wobei M die eine oder mehreren einer Alkalimetallverbindung und einer Erdalkalimetallverbindung in einer Menge im Bereich von 0,5 bis 10 Gewichts-%, vorzugsweise im Bereich von 1 bis 5 Gewichts-%, besonders bevorzugt im Bereich von 1,25 bis 2,75 Gewichts-%, bezogen auf das Gewicht der Mischung M, umfasst.

4. Das Verfahren nach einem der Ansprüche 1 bis 3, wobei (ii) umfasst
(ii.1) Einbringen des gemäß (i) bereitgestellten festen Materials W, einer oder mehrerer einer Alkalimetallverbindung und einer Erdalkalimetallverbindung sowie eines Additivs, das ein Polyamid 66 umfasst, in eine Vorrichtung D1, die in U_{D} enthalten ist, wobei D1 eines oder mehrere aus einem Extruder, einem Mischer und einem Rührreaktor ist, vorzugsweise ein Extruder;
(ii.2) Inkontaktbringen des festen Materials W, der einen oder mehreren einer Alkalimetallverbindung und einer Erdalkalimetallverbindung sowie des Additivs in D1 bei einer Temperatur T_{E}, mit T_{E} > T_{M}, wobei T_{M} der Schmelzpunkt des in W enthaltenen Polyamids ist, wobei eine Mischung M erhalten wird, vorzugsweise eine geschmolzene Mischung.

5. Das Verfahren nach Anspruch 3 oder 4, wobei T_{E} im Bereich von 230 bis 320 °C liegt, vorzugsweise im Bereich von 250 bis 310 °C, besonders bevorzugt im Bereich von 260 bis 300 °C.

6. Das Verfahren nach einem der Ansprüche 1 bis 5, wobei die Depolymerisation gemäß (iii) bei einer Temperatur T_{D} durchgeführt wird, wobei T_{D} im Bereich von 230 bis 320 °C liegt, vorzugsweise im Bereich von 250 bis 310 °C, besonders bevorzugt im Bereich von 260 bis 300 °C.

7. Das Verfahren nach einem der Ansprüche 1 bis 6, wobei die Depolymerisation gemäß (iii) bei einem Druck p_{D} durchgeführt wird, wobei p_{D} im Bereich von 1 bis 150 mbar (abs) liegt, vorzugsweise im Bereich von 5 bis 120 mbar (abs), besonders bevorzugt im Bereich von 10 bis 100 mbar (abs).

8. Das Verfahren nach einem der Ansprüche 1 bis 7, wobei (iii) umfasst
Einbringen der gemäß (ii), vorzugsweise gemäß (ii.2), erhaltenen Mischung M in einen Depolymerisationsreaktor R_{D}, der in U_{D} enthalten ist, und Unterwerfen von M unter Depolymerisationsbedingungen, wobei eine gasförmige Mischung G1 erhalten wird, die ε-Caprolactam umfasst.

9. Das Verfahren nach einem der Ansprüche 1 bis 8, wobei die Depolymerisation gemäß (iii) für eine Dauer im Bereich von 1 bis 240 min durchgeführt wird, vorzugsweise im Bereich von 15 bis 150 min, besonders bevorzugt im Bereich von 20 bis 100 min.

10. Das Verfahren nach einem der Ansprüche 1 bis 9, wobei das Additiv Polyamid 66 ist; oder wobei das Additiv ein Copolymer ist, das ein Polyamid 66 umfasst, wobei das Additiv vorzugsweise ein Copolymer aus Polyamid 66 und Polyamid 6 ist.

11. Das Verfahren nach einem der Ansprüche 1 bis 10, ferner umfassend
(iv) Leiten von G1, das ε-Caprolactam umfasst, in eine Reinigungseinheit PU, wobei ein gereinigter Strom P2 erhalten wird, der ε-Caprolactam umfasst, wobei die Konzentration von ε-Caprolactam C_{C2} in P2 > die Konzentration von ε-Caprolactam C_{C1} in G1 ist;
wobei PU vorzugsweise ausgewählt ist aus der Gruppe bestehend aus einer Destillationseinheit, einer Kristallisationseinheit, einer Extraktionseinheit, einer Rektifikationseinheit, einer Filtrationseinheit, einer Ionenaustauschereinheit, einer Hydrierungseinheit, einer Oxidationseinheit und einer Kombination von zwei oder mehr davon, besonders bevorzugt ausgewählt aus der Gruppe bestehend aus einer Destillationseinheit, einer Kristallisationseinheit und einer Kombination davon.

12. Das Verfahren nach Anspruch 11, wobei (iv) umfasst
(iv.1) Leiten von G1 durch eine Reinigungsteileinheit PSU1, die in PU enthalten ist, wobei PSU1 vorzugsweise eine Destillationseinheit ist, wobei ein gereinigter Strom G11 erhalten wird, der ε-Caprolactam umfasst, wobei die Konzentration von ε-Caprolactam C_{C11} in G11 > die Konzentration von ε-Caprolactam C_{C1} in G1 ist;
(iv.2) vorzugsweise Leiten von G11, das gemäß (iv.1) erhalten wurde, durch eine Reinigungsteileinheit PSU2, die in PU enthalten ist, wobei PSU2 stromabwärts von PSU1 angeordnet ist, wobei PSU2 vorzugsweise eine Destillationseinheit ist, wobei ein gereinigter Strom G12 erhalten wird, der ε-Caprolactam umfasst, wobei die Konzentration von ε-Caprolactam C_{C12} in G12 > die Konzentration von ε-Caprolactam C_{C11} in G11 ist;
(iv.3) Leiten von G11, das gemäß (iv.1) erhalten wurde, vorzugsweise von G12, das gemäß (iv.2) erhalten wurde, durch eine Reinigungsteileinheit PSU3, die in PU enthalten ist, wobei PSU3 stromabwärts von PSU1 und, falls vorhanden, stromabwärts von PSU2 angeordnet ist, wobei PSU3 vorzugsweise eine Kristallisationseinheit ist, wobei ein gereinigter Strom P2 erhalten wird, der ε-Caprolactam umfasst, wobei die Konzentration von ε-Caprolactam C_{C2} in P2 > die Konzentration von ε-Caprolactam C_{C11} in G11 ist, vorzugsweise > die Konzentration von ε-Caprolactam C_{C12} in G12.

## Revendications

1. Un procédé de dépolymérisation du polyamide 6, ledit polyamide étant contenu dans un matériau solide W, le procédé comprenant
(i) la fourniture du matériau solide W contenant le polyamide ;
(ii) la préparation d'un mélange M comprenant le matériau solide W fourni selon (i), et un ou plusieurs d'un composé de métal alcalin et d'un composé de métal alcalino-terreux, M comprenant en outre un additif comprenant un polyamide 66,
dans lequel M contient le polyamide 66 compris dans l'additif en une quantité allant de 1 à 8 % en poids, sur la base du poids du mélange M ;
(iii) la soumission du mélange M préparé selon (ii) à des conditions de dépolymérisation dans une unité de dépolymérisation U_{D}, obtenant un mélange gazeux G1 comprenant de l'ε-caprolactame.

2. Le procédé de la revendication 1, dans lequel M comprend un composé de métal alcalin ou un composé de métal alcalino-terreux, de préférence un composé de métal alcalin, plus préférablement un hydroxyde de métal alcalin.

3. Le procédé de la revendication 1 ou 2, dans lequel M comprend le ou les composés de métal alcalin et/ou de métal alcalino-terreux en une quantité allant de 0,5 à 10 % en poids, de préférence allant de 1 à 5 % en poids, plus préférablement allant de 1,25 à 2,75 % en poids, sur la base du poids du mélange M.

4. Le procédé selon l'une quelconque des revendications 1 à 3, dans lequel (ii) comprend
(ii.1) l'introduction du matériau solide W fourni selon (i), d'un ou plusieurs d'un composé de métal alcalin et d'un composé de métal alcalino-terreux, et d'un additif comprenant un polyamide 66 dans un dispositif D1 compris dans U_{D}, dans lequel D1 est un ou plusieurs d'une extrudeuse, d'un mélangeur et d'un réacteur agité, de préférence une extrudeuse ;
(ii.2) la mise en contact du matériau solide W, du ou des composés de métal alcalin et/ou de métal alcalino-terreux et de l'additif dans D1 à une température T_{E}, avec T_{E} > T_{M}, T_{M} étant le point de fusion du polyamide compris dans W, obtenant un mélange M, de préférence un mélange fondu.

5. Le procédé de la revendication 3 ou 4, dans lequel T_{E} est dans la plage allant de 230 à 320 °C, de préférence dans la plage allant de 250 à 310 °C, plus préférablement dans la plage allant de 260 à 300 °C.

6. Le procédé selon l'une quelconque des revendications 1 à 5, dans lequel la dépolymérisation selon (iii) est effectuée à une température T_{D}, T_{D} étant dans la plage allant de 230 à 320 °C, de préférence dans la plage allant de 250 à 310 °C, plus préférablement dans la plage allant de 260 à 300 °C.

7. Le procédé selon l'une quelconque des revendications 1 à 6, dans lequel la dépolymérisation selon (iii) est effectuée à une pression p_{D}, p_{D} étant dans la plage allant de 1 à 150 mbar (abs), de préférence dans la plage allant de 5 à 120 mbar (abs), plus préférablement dans la plage allant de 10 à 100 mbar (abs).

8. Le procédé selon l'une quelconque des revendications 1 à 7, dans lequel (iii) comprend l'introduction du mélange M obtenu selon (ii), de préférence selon (ii.2), dans un réacteur de dépolymérisation R_{D} compris dans U_{D}, et la soumission de M à des conditions de dépolymérisation, obtenant un mélange gazeux G1 comprenant de l'ε-caprolactame.

9. Le procédé selon l'une quelconque des revendications 1 à 8, dans lequel la dépolymérisation selon (iii) est effectuée pendant une durée allant de 1 à 240 min, de préférence allant de 15 à 150 min, plus préférablement allant de 20 à 100 min.

10. Le procédé selon l'une quelconque des revendications 1 à 9, dans lequel l'additif est le polyamide 66 ; ou dans lequel l'additif est un copolymère comprenant un polyamide 66, dans lequel de préférence l'additif est un copolymère de polyamide 66 et de polyamide 6.

11. Le procédé selon l'une quelconque des revendications 1 à 10, comprenant en outre
(iv) le passage de G1 comprenant de l'ε-caprolactame dans une unité de purification PU, obtenant un flux purifié P2 comprenant de l'ε-caprolactame, la concentration d'ε-caprolactame C_{C2} dans P2 > la concentration d'ε-caprolactame C_{C1} dans G1 ;
dans lequel PU est de préférence sélectionné dans le groupe constitué d'une unité de distillation, d'une unité de cristallisation, d'une unité d'extraction, d'une unité de rectification, d'une unité de filtration, d'une unité d'échange d'ions, d'une unité d'hydrogénation, d'une unité d'oxydation et d'une combinaison de deux ou plusieurs de ceux-ci, plus préférablement sélectionné dans le groupe constitué d'une unité de distillation, d'une unité de cristallisation et d'une combinaison de celles-ci.

12. Le procédé de la revendication 11, dans lequel (iv) comprend
(iv.1) le passage de G1 à travers une sous-unité de purification PSU1 comprise dans PU, PSU1 étant de préférence une unité de distillation, obtenant un flux purifié G11 comprenant de l'ε-caprolactame, la concentration d'ε-caprolactame C_{C11} dans G11 > la concentration d'ε-caprolactame C_{C1} dans G1 ;
(iv.2) de préférence le passage de G11 obtenu selon (iv.1) à travers une sous-unité de purification PSU2 comprise dans PU, PSU2 étant située en aval de PSU1, PSU2 étant de préférence une unité de distillation, obtenant un flux purifié G12 comprenant de l'ε-caprolactame, la concentration d'ε-caprolactame C_{C12} dans G12 > la concentration d'ε-caprolactame C_{C11} dans G11 ;
(iv.3) le passage de G11 obtenu selon (iv.1), de préférence de G12 obtenu selon (iv.2), à travers une sous-unité de purification PSU3 comprise dans PU, PSU3 étant située en aval de PSU1, et en aval de PSU2 si présente, PSU3 étant de préférence une unité de cristallisation, obtenant un flux purifié P2 comprenant de l'ε-caprolactame, la concentration d'ε-caprolactame C_{C2} dans P2 > la concentration d'ε-caprolactame C_{C11} dans G11, de préférence > la concentration d'ε-caprolactame C_{C12} dans G12.
